# EUROPEAN PATENT SPECIFICATION

(11) **EP 4 197 304 B1**
(45) Date of publication and mention of the grant of the patent: **11.03.2026**
(21) Application number: 22197125.2
(22) Date of filing: 22.09.2022
(51) Int. Cl.: A01B 39/02, A01B 39/18, A01M 7/00, A01M 21/02, A01M 21/04

(54) **VEHICLES AND METHODS FOR TREATING AN AGRICULTURAL FIELD**
FAHRZEUGE UND VERFAHREN ZUR BEHANDLUNG EINES LANDWIRTSCHAFTLICHEN FELDES
VÉHICULES ET PROCÉDÉS DE TRAITEMENT D'UN CHAMP AGRICOLE

(30) Priority: 20.12.2021 GB 202118539
(43) Date of publication of application: 21.06.2023
(73) Proprietor: AGCO International GmbH, 8212 Neuhausen am Rheinfall (CH)
(72) Inventor: LAUWEN, Eerke, 87616 Marktoberdorf (DE)
(74) Representative: AGCO Intellectual Property Department

(56) References cited:
- WO-A1-2017/181127
- CN-A- 110 972 576
- CN-U- 207 820 489
- US-A1- 2018 153 084
- US-A1- 2018 168 141
- US-A1- 2021 144 903

## Description

### BACKGROUND

U.S. Patent 10,455,826, "Method for Autonomously Weeding Crops in an Agricultural Field," granted October 29, 2019, discloses an autonomous agricultural machine for destroying weeds growing within crop rows. The machine has a tool housing including four tool receptacles that can be loaded with a weeding module for destroying weeds. Though the main application of the machine is weeding, the receptacles can be loaded with other tools. For example, the weeding module can be replaced by a fertilizer tool. Thus, the machine can be used for different tasks or field operations.

US 2021/0144903 discloses a method for analyzing individual plants in an agricultural field with analyzing images from a camera.

US 2018/0168141 A1 reveals a robot vehicle and a method for an automatic treatment of vegetable organisms. The robot vehicle selecting (with the analysis of images) one of at least two treatment tools for treating each vegetable organism without harming surrounding vegetable organisms. Thus, it is possible to use both a knife for killing weed and spraying a substance (e. g. pesticide) at the same time.

### BRIEF SUMMARY

In one aspect, a vehicle for treating an agricultural field includes a weeding-injection unit and a control unit. The weeding-injection unit includes a valve, at least one weeding knife, at least one actuator configured to move the at least one weeding knife, an injection line carried by the at least one weeding knife, and the valve configured to regulate flow of a substance through the injection line. The control unit is configured to identify a plant and control the at least one actuator and the valve to treat the identified plant.

The vehicle may be an autonomous vehicle. The vehicle may also include a camera configured to detect the plant. The control unit may be configured to distinguish between a crop and a weed. The control unit may also be configured to adjust an orientation of the injection line.

The vehicle may include a storage tank configured to contain the substance and a pump configured to deliver the substance to the injection line via at least one distribution line.

The at least one weeding knife may optionally include a left weeding knife and a right weeding knife. Each weeding knife may include a blade. Each weeding knife may carry an injection line. The injection line(s) may each include a nozzle.

The vehicle may also include a second storage tank configured to contain a second substance and a second pump configured to deliver the second substance to the injection line via at least a second distribution line. In such embodiments, the valve is configured to alternately regulate flow of the first substance or the second substance through the injection line.

Another aspect includes a method of treating an agricultural field with a vehicle traversing the agricultural field. The method includes detecting a plant in a crop row, and determining whether the plant is a crop or a weed. If the plant is a crop, at least one weeding knife is moved to prevent the at least one weeding knife from contacting the plant as the vehicle traverses the agricultural field, and a substance is injected through an injection line (which may include a fixed or adjustable nozzle) carried by the weeding knife. If the plant is a weed, the at least one weeding knife is moved to cause the at least one weeding knife to disturb the plant as the vehicle traverses the agricultural field.

The plant may be detected with an autonomous vehicle traveling along the crop row in the agricultural field. The plant may be detected in a crop row by analyzing captured image data from a camera carried by the vehicle. Determining whether the plant is a crop or a weed may include analyzing stored map data. The method may also include analyzing a growth stage of the plant.

Moving the at least one weeding knife to cause the at least one weeding knife to disturb the plant may include opening and closing a pair of weeding knives.

The method may also include determining an amount of the substance to inject and/or an injection pattern of the substance based at least in part on the growth stage of the plant.

If the plant is a weed, a second substance may be injected through the injection line carried by the weeding knife. In such embodiments, the method may also include determining an amount of the second substance to inject and/or an injection pattern of the second substance based at least in part on the growth stage of the plant.

Some embodiments have one integrated tool for weeding (damaging or removing) unwanted plants and injecting a substance for wanted plants (crops). Methods includes a way of injecting liquid fertilizer into the soil. A benefit of some disclosed embodiments is to supply a selected amount of fertilizer to a specific plant directly into the soil around the roots, such that the fertilizer is readily accessible to the crop.

Other technical features may be readily apparent to one skilled in the art from the following figures, descriptions, and claims.

### BRIEF DESCRIPTION OF THE DRAWINGS

While the specification concludes with claims particularly pointing out and distinctly claiming what are regarded as embodiments of the present disclosure, various features and advantages may be more readily ascertained from the following description of example embodiments when read in conjunction with the accompanying drawings, in which:
FIG. 1 is a simplified top view of an agricultural vehicle with an implement for weeding and injecting fertilizer or another substance;
FIG. 2 is a simplified view of a control unit of the vehicle shown in FIG. 1;
FIG. 3 is a simplified view of a weeding-injection unit of the vehicle shown in FIG. 1 when weeding;
FIG. 4 is a simplified view of a weeding-injection unit of the vehicle shown in FIG. 1 when injecting fertilizer;
FIG. 5A through FIG. 5E are simplified top views of various crop rows, and illustrate how the vehicle of FIG. 1 may be used to treat such crop rows;
FIG. 6 is a simplified flow chart illustrating a method of using the vehicle of FIG. 1 to treat crop rows;
FIG. 7 is a simplified view of another control unit that may be used in the vehicle shown in FIG. 1;
FIG. 8 is a simplified view of a weeding-injection unit of a vehicle using the control unit shown in FIG. 7 when injecting fertilizer; and
FIG. 9 is a simplified flow chart illustrating a method of using a vehicle with the control unit shown in of FIG. 7 to treat crop rows.

### DETAILED DESCRIPTION

The illustrations presented herein are not actual views of any weeding machine or portion thereof, but are merely idealized representations to describe example embodiments of the present disclosure. Additionally, elements common between figures may retain the same numerical designation.

The following description provides specific details of embodiments. However, a person of ordinary skill in the art will understand that the embodiments of the disclosure may be practiced without employing many such specific details. Indeed, the embodiments of the disclosure may be practiced in conjunction with conventional techniques employed in the industry. In addition, the description provided below does not include all the elements that form a complete structure or assembly. Only those process acts and structures necessary to understand the embodiments of the disclosure are described in detail below. Additional conventional acts and structures may be used. The drawings accompanying the application are for illustrative purposes only, and are thus not drawn to scale.

As used herein, the terms "comprising," "including," "containing," "characterized by," and grammatical equivalents thereof are inclusive or open-ended terms that do not exclude additional, unrecited elements or method steps, but also include the more restrictive terms "consisting of" and "consisting essentially of" and grammatical equivalents thereof.

As used herein, the term "may" with respect to a material, structure, feature, or method act indicates that such is contemplated for use in implementation of an embodiment of the disclosure, and such term is used in preference to the more restrictive term "is" so as to avoid any implication that other, compatible materials, structures, features, and methods usable in combination therewith should or must be excluded.

As used herein, the term "configured" refers to a size, shape, material composition, and arrangement of one or more of at least one structure and at least one apparatus facilitating operation of one or more of the structure and the apparatus in a predetermined way.

As used herein, the singular forms following "a," "an," and "the" are intended to include the plural forms as well, unless the context clearly indicates otherwise.

As used herein, the term "and/or" includes any and all combinations of one or more of the associated listed items.

As used herein, spatially relative terms, such as "beneath," "below," "lower," "bottom," "above," "upper," "top," "front," "rear," "left," "right," and the like, may be used for ease of description to describe one element's or feature's relationship to another element(s) or feature(s) as illustrated in the figures. Unless otherwise specified, the spatially relative terms are intended to encompass different orientations of the materials in addition to the orientation depicted in the figures.

As used herein, the term "substantially" in reference to a given parameter, property, or condition means and includes to a degree that one of ordinary skill in the art would understand that the given parameter, property, or condition is met with a degree of variance, such as within acceptable manufacturing tolerances. By way of example, depending on the particular parameter, property, or condition that is substantially met, the parameter, property, or condition may be at least 90.0% met, at least 95.0% met, at least 99.0% met, or even at least 99.9% met.

As used herein, the term "about" used in reference to a given parameter is inclusive of the stated value and has the meaning dictated by the context (e.g., it includes the degree of error associated with measurement of the given parameter).

As used throughout, ranges are used as shorthand for describing each and every value that is within the range. Any value within the range can be selected as the terminus of the range.

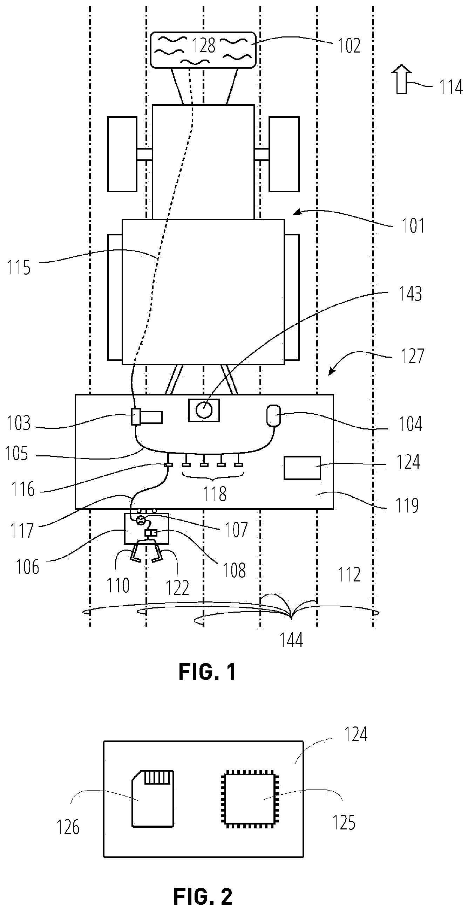

FIG. 1 shows an agricultural vehicle 101 connected with an implement 127 for weeding weeds and for injecting a substance 128 on crop of a crop row 144. The substance 128 can be a fluid, such as a fertilizer, herbicide, pesticide, fungicide, water, or any combination thereof. The agricultural vehicle 101 can be an autonomous vehicle and be of the type of a tractor or an agricultural robot.

The agricultural vehicle 101 has a storage tank 102 for storing the injecting substance 128. Alternatively or additionally, the storage tank 102 could be integrated into the implement 127.

The implement 127 has a carrier 119 to integrate or mount all components of the implement 127. The carrier 119 also has an interface to connect with the vehicle 101. The implement 127 includes a pump 103 connected with the storage tank 102 via a pipe 115 to pressurize the substance 128 in a distribution line 105. The distribution line 105 has one or more interfaces 116, 118 for connecting a weeding-injection unit 106. Alternatively, the pump 103 can be integrated into another component, such as the storage tank 102.

The weeding-injection unit 106 has a left weeding knife 110 and a right weeding knife 122 to treat or to destroy weeds. The weeding-injection unit 106 is connected to the interface 116 of the distribution line 105 via a connection pipe 117 configured to be supplied with the pressurized substance 128. Analogously, additional weeding-injection units 106 may be connected to one of the other interfaces 118.

If multiple weeding-injection units 106 are connected to the distribution line 105, then there may be a relatively high demand for the substance 128 from all weeding-injection units 106, causing a pressure drop in the distribution line 105. This pressure drop can be compensated by an expansion vessel 104 at the end of the distribution line 105. This expansion vessel 104 helps maintain the pressure on the distribution line 105 long enough for the pump 103 to maintain the desired pressure.

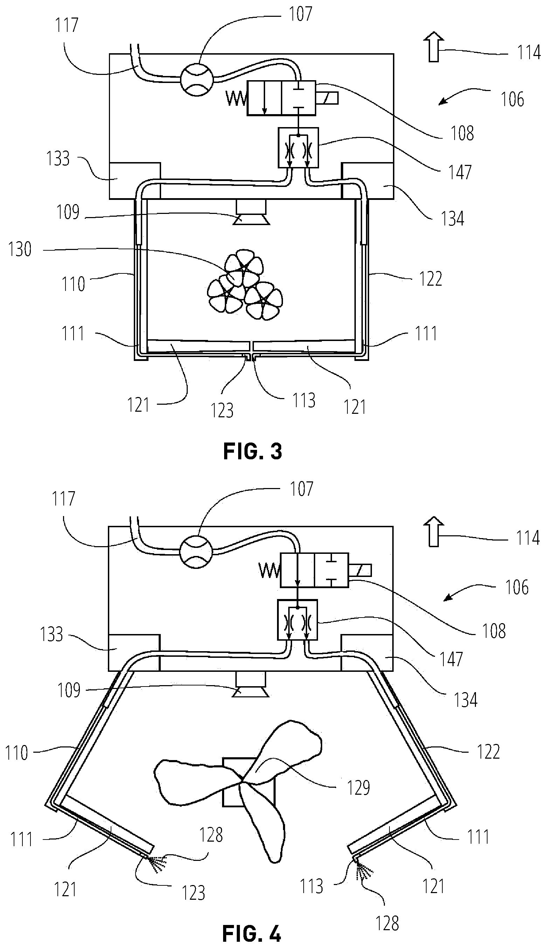

The weeding-injection unit 106 comprises a flowmeter 107 to control the amount of substance 128 to be injected into the soil and a 2/2-way solenoid valve 108 (*e.g.,* a 2/2-way solenoid valve) to control the timing of the injection. The 2/2-way solenoid valve 108 has an input connected with the connection pipe 117. The output of the 2/2-way solenoid valve 108 is connected with a flow divider 147 to distribute the substance 128 evenly to the left and to the right injection line 111 of the left weeding knife 110 and right weeding knife 122. The 2/2-way solenoid valve 108 can be switched between two different positions. In a first position, as shown in FIG. 4, the substance 128 can be introduced into the injection lines 111. In a second position, as shown in FIG. 3, introduction of the substance 128 into the injection lines 111 is blocked.

The implement 127 has a control unit 124 to monitor and adjust the flowmeter 107 and to control the 2/2-way solenoid valve 108, as well as to control the actuation of the left weeding knife 110 and right weeding knife 122. Instead of or in addition to the central control unit 124, each individual weeding-injection unit 106 can also include a local control unit communicating with the central control unit 124 and/or with a local control unit of another weeding-injection unit 106.

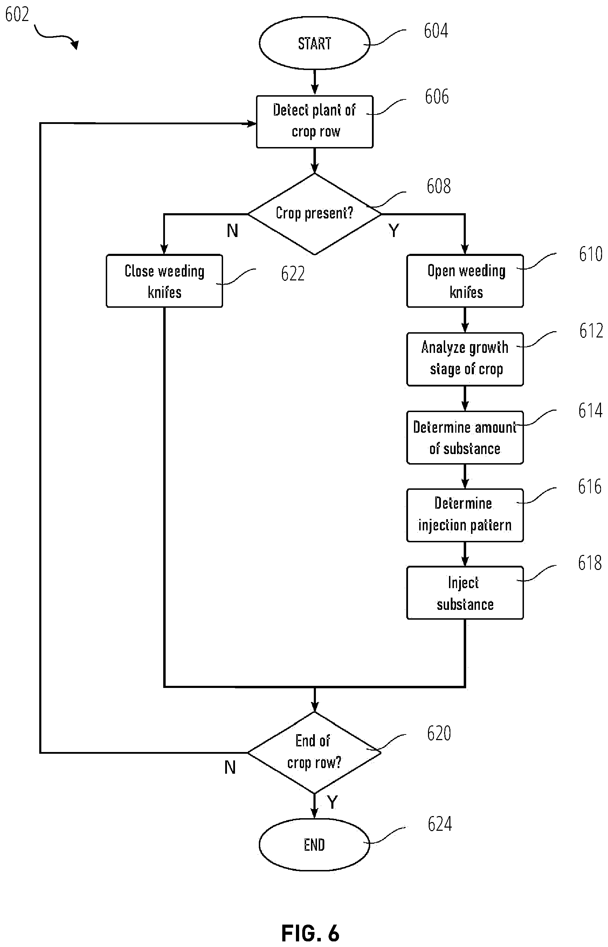

FIG. 2 shows the control unit 124 in more detail. The control unit 124 has a controller 125 and a memory 126. The memory 126 stores a computer-implemented method, such as the depicted in FIG. 6 and described below. The computer-implemented method is a computer program product that can be carried out by the controller 125 of the control unit 124. In addition to the method, parameters, variables and other data can be stored in the memory 126 by the controller 125 or read out from the memory 126 by the controller 125.

FIG. 3 and FIG. 4 show the weeding-injection unit 6 more detail. FIG. 3 shows the left weeding knife 110 and right weeding knife 122 in a closed position for treating or destroying a weed 130, and FIG. 4 shows the weeding knives 110, 122 in an open position for sparing a crop 129. The left weeding knife 110 can be actuated for opening or closing by a first actuator 133 located in the implement 127. The right weeding knife 122 can be actuated for opening or closing by a second actuator 134 also located in the implement 127. Both actuators 133, 134 are controlled by the control unit 124.

Alternatively, the left weeding knife 110 and the right weeding knife 122 can be actuated by a common actuator, such as a hydraulic double-piston cylinder.

Both weeding knives 110, 122 have blades 121 for cutting the weed 130 (e.g., to cut the leaves of the weed 130) and/or for cutting into the soil 112 to damage the roots of the weed 130 when the knives 110, 122 are in the closed position (as shown in FIG. 3). Each weeding knife 110, 122 also has an injection line 111 coupled with the connection pipe 117 to convey the substance 128 to the edge of the blades 121 of the corresponding weeding knives 110, 122. The same weeding knife 110, 122 can be used for weeding as well as for fertilizing. At the edge of the left weeding knife 110, the injection line 111 of the left weeding knife 110 can be connected to a left injection nozzle 123; analogously, a right injection nozzle 113 is connected to the injection line 111 of the right weeding knife 122 at the edge of the right weeding knife 122. In other embodiments, the nozzles 113, 123 may be omitted, and the substance 128 can simply be dispensed from the end of the injection lines 111.

The injection nozzles 113, 123 are adjustable by the control unit 124 so that each nozzle 113, 123 can inject the substance 128 independently from the other in different directions, as indicated in FIG. 4. In other embodiments, the injection nozzles 113, 123 may be fixed relative to the knives 110, 122.

The implement 127, respectively the weeding-injection unit 106, has a camera 109 or other selected sensor for sensing the crop 129 or weed 130 in or near a crop row 144. The camera 109 is connected to the control unit 124 for sending its captured image data to the control unit 124.

Alternatively or additionally, the implement 127 comprises a GNSS receiver 143 (FIG. 1) to determine the position of the implement 127 and/or the position of the agricultural vehicle 101.

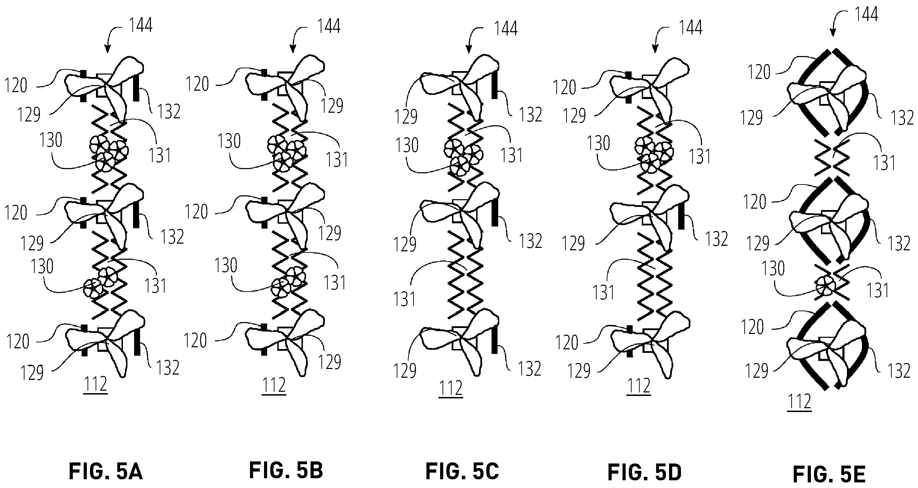

FIG. 5A through FIG. 5E show various crop rows 144 with plant (crop 129 and/or weed 130) growing on the soil 112. Each plant 129, 130 has a defined position in the agricultural field.

The memory 126 (FIG. 2) may store a map of all positions of the plant 129, 130. For example, the positions of crops 129 may have been determined during a prior seeding operation and stored in or transferred to the memory 126. The positions of the weeds 130 may also have been determined during another prior field operation and stored in or transferred to the memory 126. Based on stored position data, the controller 125 can determine a relative position between the agricultural vehicle 101 and/or the implement 127 and the plant (i.e., crops 129 or weeds 130) when the agricultural vehicle 101 travels through the agricultural field along the crop rows 144.

FIG. 6 depicts a simplified flow chart of a method 602 of detecting of plant, treating weeds, and injecting the substance 128 into soil 112. The agricultural vehicle 101 (FIG. 1) travels through the agricultural field along the crop rows 144 in the working direction 114, and each weeding-injection unit 106 of the implement 127 is aligned with a crop row 144.

The method starts at 604 and proceeds to 606.

At 606, the camera 109 captures information about the soil 112 to detect a plant 129, 130 of the crop row 144. Additionally or alternatively, the control unit 124 compares the position of the implement 127 with the map data stored in the memory 126 including the positions of the crop 129 and the weed 130 to detect a plant of the crop row 144.

As shown at 608, the control unit 124 checks whether the detected plant is crop 129. The control unit 124 analyzes the captured image data of the camera 109 and/or evaluates the map data for this determination.

If crop 129 is present, the weeding knives 110, 122 open, as shown at 610. If no plant is detected or if the detected plant is a weed 130, the knives 110, 122 are closed, as shown at 622.

When crop 129 is detected, the control unit 124 controls the actuators 133, 134 to open the weeding knives 110, 122, as depicted at 610, so that the blades 121 move out of a weeding section 131 of the crop row 144 and avoid damaging the crop 129 (see FIG. 4).

As indicated at 612, the control unit 124 analyzes the growth stage of the crop 129. For example, insights in the plant growth stage may be obtained by the camera 109 based on the captured image data of the crop 129. Alternatively or additionally, the control unit 124 can evaluate the map data stored in the memory 126 to analyze the growth stage of the crop 129.

As indicated at 614, the control unit 124 determines the amount of substance 128 to apply to the crop 129 based on the growth stage of the crop 129. An underdeveloped crop 129 may benefit from more of the substance 128 (e.g., fertilizer) to promote the growth of the crop 129. Alternatively, the amount of substance 128 can be predefined (e.g., by an operator), in which case a fixed amount of substance is injected independent of the growth of the crop 129.

As indicated at 616, the control unit 124 determines an appropriate injection pattern. As can be seen in FIG. 5A to FIG. 5E, various injection patterns are possible. A pattern can be selected by the control unit 124 based on the growth stage of the crop 129 and other parameters, such as soil properties, obstacles as stones in the soil 112 that could damage the blades 121, the position of the crop 129 relative to the position of the weeding-injection unit 106 to compensate for misalignment, *etc.,* resulting in improving accessibility to the fertilizer for the plant. The selected pattern can be confirmed by an operator. If the operator wishes a different pattern, the operator can select a pattern manually.

The substance 128 is injected into the soil 112 at 618. Depending on the pattern selected at 616, the fertilizer injection typically starts just before the weeding knives 110, 122 open (FIG. 5E) or when the weeding knives 110, 122 are open (FIG. 5A through FIG. 5D) and continues until the desired injection dosage is reached. The control unit 124 controls the flowmeter 107 and the 2/2-way solenoid valve 108 to control the start position and end position of the injection as well as the amount of substance 128 to be injected into the soil 112 from the start position to the end position of the injection. Thus, each crop 129 can be individually fertilized depending on the settings as fertilizer pressure, driving speed of the agricultural vehicle 101, needed fertilizer dosage, wind speed, and more.

In the injection pattern shown in FIG. 5A, the crop 129 is fertilized on the left and the right side of each crop 129, along a left injection section 120 and a right injection section 132. In other words, the blade 121 of the left weeding knife 110 cuts the soil 112 along the left injection section 120 while the substance 128 is injected into the soil 112 to introduce the substance 128 to the roots of the crop 129. Analogously, the blade 121 of the right weeding knife 122 cuts the soil 112 along the right injection section 132 while the substance 128 is injected into the soil 112 to introduce the substance 128 to the roots of the crop 129. In the injection pattern shown in FIG. 5B, the crop 129 is fertilized on the left side along a left injection section 120. In the injection pattern shown in FIG. 5C, the crop 129 is fertilized on the right side along a right injection section 132 only. In the injection pattern shown in FIG. 5D, the crop 129 is fertilized alternately on the left and right side: one crop 129 is fertilized along a left injection section 120 and the next crop 129 is fertilized along a right injection section 132.

In the injection pattern shown in FIG. 5E, the substance 128 is injected around the crop 129 along a left injection section 120 and along a right injection section 132, each in an arc-shaped pattern. The control unit 124 controls the actuators 133, 134 to control the weeding knives 110, 122 accordingly. Thus, the blades 121 of the weeding knives 110, 122 cut the soil 112 in arc shapes, and the substance 128 is injected into the soil 112 along the arc shapes. A single element, namely the weeding knives 110, 122 as a combined treatment, cuts the soil 112 on each side of the crop 129 and injects the substance 128 into the soil 112.

Besides the injection patterns mentioned, other injection patterns are possible, for example a combination of two of the patterns shown in FIG. 5A through FIG. 5E.

The control unit 124 also controls the orientation of the left nozzle 123 of the left weeding knife 110 and the orientation of the right nozzle 113 of the right weeding knife 122. As can be seen in FIG. 4, thus, the direction to which the substance 128 is injected can be adjusted. Since the nozzles 123, 113 are located at the edge of their corresponding left and right weeding knives 110, 122, the fertilizer may be horizontally injected into the soil 112 just behind the weeding knives 110, 122, combining cutting and fertilizing functions to improve fertilizer placement. When the weeding knives 110, 122 are actuated in the direction of the end orientation of the injection line, the nozzles 123, 113 can be oriented in the opposite direction of the working direction 114 to avoid clogging.

After the injection has finished, the method proceeds to 620, in which the control unit 124 determines whether the end of the crop row 144 has been reached. If not, the method 602 repeats 606.

If an absence of a crop 129 (and/or presence of weed 130) was detected by the check of 608, the control unit 124 closes the weeding knives 110, 122 to remove or damage the weed 130 (see FIG. 3). In addition, the control unit 124 may also close the 2/2-way solenoid valve 108 to avoid fertilization of weeds 130.

As can be seen in FIG. 5A through FIG. 5E, weeds 130 may be present between the crops 129 of a crop row 144. Thus, the control unit 124 may keep the weeding knives 110, 122 closed along a weeding section 131 of the crop row 144. Alternatively, the weeding knives 110, 122 can be actuated in a zig-zag open & close pattern for a repeated jabbing of the blades 121 into the soil 112 to hoe the roots of the weeds 130 along the weeding section 131.

After weeding the detected weeds 130, the method proceeds to 620, and the control unit 124 checks whether the implement 127 has reached the end of the crop row 144. If so, the method 602 ends at 624. If not, the method 602 repeats 606.

To improve the life span of the vehicle 101 and components, the system can be flushed at the end of a working cycle. This is done by changing the source from fertilizer to a cleaning substance (*e.g.,* water, a detergent, *etc.*) and flushing the lines 105, 111, 138.

When the agricultural vehicle 101 drives in the headland of the agricultural field, the weeding knives 110, 122 can be opened to avoid a damage of the weeding-injection unit 106.

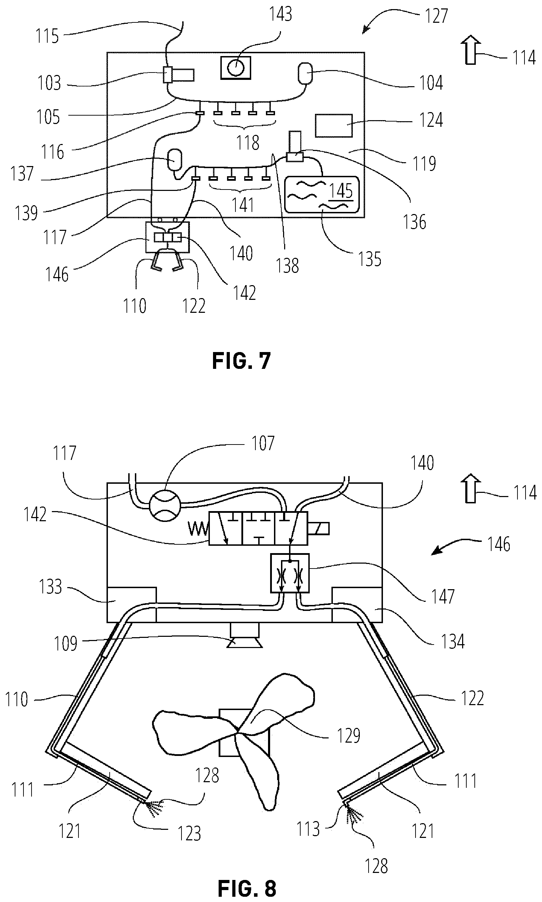

As can be seen in FIG. 7, the implement 127 may include a second storage tank 135 to store a second substance 145. The second substance 145 can be different from the first substance 128. For example, the second substance 145 may be an herbicide or boiling water for damaging the weed 130, or a fungicide for damaging parasitic fungi.

The implement 127 as shown in FIG. 7 includes a second pump 136 connected with the second storage tank 135 to pressurize the second substance 145 in a second distribution line 138. The second distribution line 138 includes at least a second interface 139, 141 for connecting a weeding-injection unit 146.

As shown for example in FIG. 7, the weeding-injection unit 146 is connected to the interface 116 of the distribution line 105 via a connection pipe 117 to be supplied with the pressurized first substance 128. Analogously, the weeding-injection unit 146 is connected to the second interface 139 of the second distribution line 138 via a second connection pipe 140 to be supplied with the second pressurized second substance 145.

If multiple weeding-injection units 146 are connected to the second distribution line 138, then there may be a high demand for the second substance 145, which may at times cause a pressure drop in the second distribution line 138. This pressure drop can be compensated by a second expansion vessel 137 at the end of the second distribution line 138 analogous to the expansion vessel 104 shown in FIG. 1.

The weeding-injection unit 146 includes a 3/3-way solenoid valve 142 (instead of a 2/2-way solenoid valve 108, shown in FIG. 3 and FIG. 4), to control the timing of the injection of the first substance 128 as well as the timing of the injection of the second substance 145. Besides this, the structure and the components of the weeding-injection unit 146 may be the same as those shown in the weeding-injection unit 106 of FIG. 1 through FIG. 4 and described above.

The control unit 124 of the implement 127 controls the 3/3-way solenoid valve 142, as well as to control the actuation of the left weeding knife 110 and the right weeding knife 122.

FIG. 8 shows the weeding-injection unit 146 with the left weeding knife 110 and the right weeding knife 122 in an open position for sparing the crop 129. The 3/3-way solenoid valve 142 has two inputs: one input is connected with the connection pipe 117, and the other input is connected with the connection pipe 140. The output of the 3/3-way solenoid valve 142 is connected with the injection line 111 of the left weeding knife 110 and the right weeding knife 122 as described above with respect to the weeding-injection unit 106.

The 3/3-way solenoid valve 142 can be switched between three different positions. In a first position, as shown in FIG. 8, the second substance 145 only can be introduced into the injection line 111 from the connection pipe 140. In a second position, any introduction of a substance is blocked. Neither the first nor the second substance 128, 145 can be introduced into the injection line 111. In a third position, the first substance 128 only can be introduced into the injection line 111 via the connection pipe 117. Thus, dependent on whether the first or the second substance 128, 145 is to be injected, the control unit 124 adapts the position of the 3/3-way solenoid valve 142. In other embodiments, the 3/3-way solenoid valve 142 may be replaced with a valve in which both substances 128, 145 can be injected simultaneously.

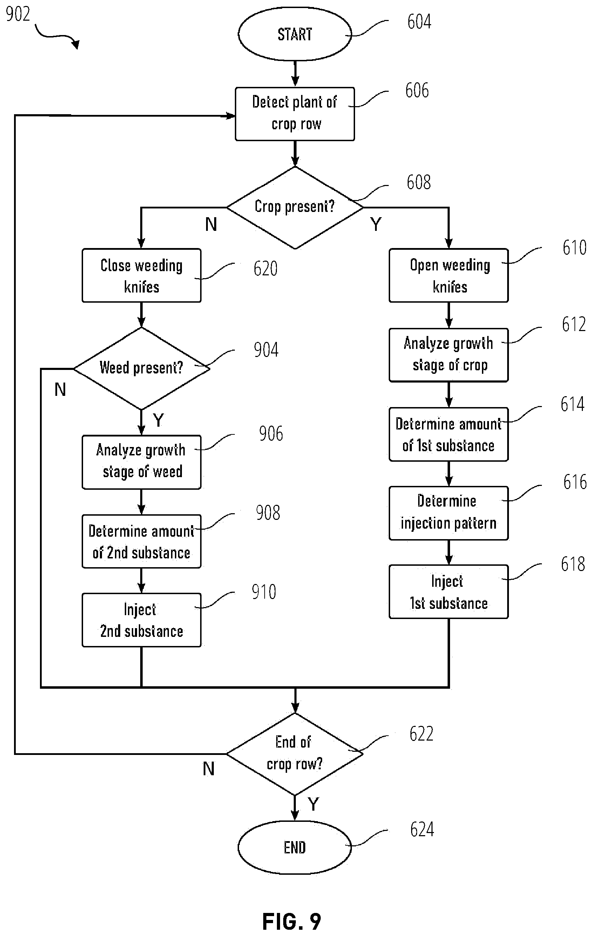

FIG. 9 depicts a simplified flow chart of a method 902 of detecting of plant, treating weeds, and injecting the substance 128 and/or the second substance 145 into soil 112 using the weeding-injection unit 146 shown in FIG. 7 and FIG. 8. Instructions for performing the method 902 may be stored in the memory 126 of the control unit 124. The method 902 the same acts 604 through 624 as the method 602 depicted in FIG. 6 and described above. However, the functionality of the 2/2-way solenoid valve 108 is instead performed by the 3/3-way solenoid valve 142. Thus, the method 902 includes additional acts as described below.

After the weeding knives 110, 122 are closed as shown at 620 or actuated in a zig-zag open-and-close pattern alternatively to kill the weed 130, the control unit 124 determines whether a weed 130 is present, as indicated at 904. The control unit 124 analyzes the captured image data of the camera 109 and checks whether the detected plant is a weed 130. Additionally or alternatively, the control unit 124 evaluates the map data comprising the positions of the weed 130.

If a weed 130 is present (i.e., the blades 121 of the weeding knives 110, 122 approach a weed 130), the control unit 124 analyzes the growth stage of the weed 130, as shown in 906. If no weed 130 is detected, the method proceeds to 622 as discussed above with respect to FIG. 6.

In some embodiments, insights into the weed growth stage may be obtained by the camera 109 based on the captures image data of the weed 130. Alternatively or additionally, the control unit 124 can evaluate the map data stored in the memory 126 to analyze the growth stage of the weed 130.

In 908, the control unit 124 determines the amount of the second substance 145 to use to treat the weed 130 based on the growth stage of the weed 130. More-developed weeds 130 may be treated with relatively more of the second substance 145 to destroy the weeds 130.

The second substance 145 is injected into the soil 112 near to the roots of the weed 130 at 910. The injection of the second substance 145 typically starts just before the weeding knives 110, 122 close and continues until the desired dosage has been delivered.

The control unit 124 controls the 3/3-way solenoid valve 142 to control the start position and end position of the injection as well as the amount of second substance 145 to be injected into the soil 112 from the start position to the end position of the injection. Thus, each weed 130 can be individually treated depending on the settings such as pressure of the second substance 145, driving speed of the agricultural vehicle 101, selected dosage of the second substance 145, wind speed, and more.

Whereas the 2/2-way solenoid valve 108 of the weeding-injection unit 106 can be switched between an open and a closed position, the 3/3-way solenoid valve 142 of the weeding-injection unit 146 can be switched between three positions as mentioned above. Thus the control unit 124 switches the 3/3-way solenoid valve 142 to the first position at 910 to connect the connection pipe 140 with the injection line 111 of the weeding knives 110, 122 to introduce the second substance 145. However, at 618, the control unit 124 switches the 3/3-way solenoid valve 142 to the third position to connect the connection pipe 117 with the injection line 111 of the weeding knives 110, 122 to introduce the first substance 128. That is, the position of the 3/3-way solenoid valve 142 depends on the detection of crop (see 608) or weed (see 904), and is switched accordingly to promote or to damage the detected plant.

The control unit 124 also controls the orientation of the left nozzle 123 of the left weeding knife 110 and the orientation of the right nozzle 113 of the right weeding knife 122. As can be seen in FIG. 8, thus, the direction to which the second substance 145 is injected can be adjusted. Since the nozzles 123, 113 are located at the edge of their corresponding left and right weeding knives 110, 122, the herbicide can be horizontally injected into the soil 112 just behind the weeding knives 110, 122, combining weeding and injecting herbicide functions at the level of individual plant.

The injection of the second substance 145 at the same time as mechanical weeding based on the closed or in a zig-zag open & close pattern actuated weeding knives 110, 122 can be performed along the weeding section 131 of the crop row 144. After weeding and treating the detected weeds 130, the control unit 124 checks whether the implement 127 has reached the end of the crop row 144 as described already above and shown at 622.

The method 602 or method 902 can be used to treat the crop 129 with a fluid other than a fertilizer or water, for example, if the crop 129 is infected by a fungus or parasitic insects. In such case, is desirable that the crop 129 not be damaged by the blades 121 of the weeding-injection unit 106, 146. Thus, in both methods 602, 902, the control unit 124 may decide to open the weeding knives 110, 122 (see 610) after crop 129 is detected (see 608). An appropriate fluid is used as the first substance 128 to treat the infection, such as a fungicide or an insecticide. At 612, the growth stage of the infection (e.g., fungus or insect) is analyzed instead of the growth stage of the crop 129 to determine the amount of the first substance 128 based on the growth stage of the infection. The other acts can be performed as described above.

### LISTING OF DRAWING ELEMENTS

101 vehicle
102 storage tank
103 pump
104 expansion vessel
105 distribution line
106 weeding-injection unit
107 flowmeter
108 2/2-way solenoid valve
109 camera
110 left weeding knife
111 injection line
112 soil
113 nozzle
114 working direction
115 pipe
116 interface
117 connection pipe
118 interfaces
119 carrier
120 left injection section
121 blade
122 right weeding knife
123 nozzle
124 control unit
125 controller
126 memory
127 implement
128 substance
129 crop
130 weed
131 weeding section
132 right injection section
133 actuator
134 actuator
135 second storage tank
136 second pump
137 second expansion vessel
138 second distribution line
139 second interface
140 connection pipe
141 interfaces
142 3/3-way solenoid valve
143 GNSS receiver
144 crop row
145 second substance
146 weeding-injection unit
147 flow divider

## Claims

1. A vehicle (101) for treating an agricultural field, comprising:
a weeding-injection unit (146) comprising:
a valve (108);
at least one weeding knife (110, 122);
at least one actuator (133, 134) configured to move the at least one weeding knife;
an injection line (111);
and
the valve configured to regulate flow of a substance (128) through the injection line; and
a control unit (124) configured to identify a plant (129, 130) and control the at least one actuator (133,134) and the valve to treat the identified plant;
**characterized in that** the injection line (111) is carried by the at least one weeding knife.

2. The vehicle of claim 1, further comprising a camera (109) configured to detect the plant.

3. The vehicle of claim 1 or 2, wherein the control unit (124) is configured to distinguish between a plant comprising crop (129) and a plant comprising weed (130).

4. The vehicle of any one of claims 1 to 3, further comprising:
a storage tank (102) configured to contain the substance; and
a pump (103) configured to deliver the substance to the injection line via at least one distribution line (105).

5. The vehicle of claim 4, further comprising:
a second storage tank (135) configured to contain a second substance; and
a second pump (136) configured to deliver the second substance to the injection line via at least a second distribution line (138);
wherein the valve (142) is configured to alternately regulate flow of the first substance or the second substance through the injection line.

6. The vehicle of any one of claims 1 to 5, wherein the at least one weeding knife comprises a left weeding knife and a right weeding knife (122).

7. The vehicle of any one of claims 1 to 6, wherein the control unit is configured to adjust an orientation of the injection line.

8. The vehicle of any one of claims 1 to 7, wherein each weeding knife comprises a blade (121).

9. The vehicle of any one of claims 1 to 8, wherein the vehicle is an autonomous vehicle.

10. The vehicle of any one of claims 1 to 9, wherein the injection line comprises a nozzle (123).

11. A method of treating an agricultural field with the vehicle of any one of claims 1 to 10 traversing the agricultural field, the method comprising:
detecting a plant in a crop row (144);
determining whether the plant is a crop (129) or a weed (130);
if the plant is a crop, moving the at least one weeding knife (110,122) to prevent the at least one weeding knife from contacting the plant as the vehicle traverses the agricultural field, and injecting a substance (128) into the soil through the injection line (111) carried by the at least one weeding knife; and
if the plant is a weed, moving the at least one weeding knife to cause the at least one weeding knife to disturb the plant as the vehicle traverses the agricultural field.

12. The method of claim 11, further comprising analyzing a growth stage of the plant.

13. The method of claim 12, further comprising determining an amount of the substance to inject or an injection pattern of the substance based at least in part on the growth stage of the plant.

14. The method of any one of claims 11 to 13, further comprising, if the plant is a weed, injecting a second substance (145) through the injection line carried by the weeding knife.

15. The method of any one of claims 11 to 14, wherein determining whether the plant is a crop or a weed comprises analyzing stored map data.

## Patentansprüche

1. Fahrzeug (101) zum Behandeln eines landwirtschaftlich genutzten Felds, umfassend:
eine Herbizidinjektionseinheit (146), die Folgendes umfasst:
ein Ventil (108),
mindestens ein Unkrautmesser (110, 122),
mindestens einen Aktuator (133, 134), der zum Bewegen des mindestens einen Unkrautmessers ausgestaltet ist,
eine Injektionsleitung (111) und
wobei das Ventil zur Regulierung der Durchflussmenge einer Substanz (128) durch die Injektionsleitung ausgestaltet ist, und
eine Steuereinheit (124), die dazu ausgestaltet ist, eine Pflanze (129, 130) zu identifizieren und den mindestens einen Aktuator (133, 134) und das Ventil zur Behandlung der identifizierten Pflanze zu steuern,
**dadurch gekennzeichnet, dass** die Injektionsleitung (111) von dem mindestens einen Unkrautmesser getragen wird.

2. Fahrzeug nach Anspruch 1, ferner umfassend eine zum Detektieren der Pflanze ausgestaltete Kamera (109).

3. Fahrzeug nach Anspruch 1 oder 2, wobei die Steuereinheit (124) dazu ausgestaltet ist, zwischen einer Pflanze, die eine Nutzpflanze (129) umfasst, und einer Pflanze, die Unkraut (130) umfasst, zu unterscheiden.

4. Fahrzeug nach einem der Ansprüche 1 bis 3, ferner umfassend:
einen Speichertank (102), der zum Enthalten der Substanz ausgestaltet ist, und
eine Pumpe (103), die dazu ausgestaltet ist, die Substanz der Injektionsleitung über mindestens eine Verteilleitung (105) zuzuführen.

5. Fahrzeug nach Anspruch 4, ferner umfassend:
einen zweiten Speichertank (135), der zum Enthalten einer zweiten Substanz ausgestaltet ist, und
eine zweite Pumpe (136), die dazu ausgestaltet ist, die zweite Substanz der Injektionsleitung über mindestens eine zweite Verteilleitung (138) zuzuführen,
wobei das Ventil (142) dazu ausgestaltet ist, abwechselnd die Durchflussmenge der ersten Substanz oder der zweiten Substanz durch die Injektionsleitung zu regulieren.

6. Fahrzeug nach einem der Ansprüche 1 bis 5, wobei das mindestens eine Unkrautmesser ein linkes Unkrautmesser und ein rechtes Unkrautmesser (122) umfasst.

7. Fahrzeug nach einem der Ansprüche 1 bis 6, wobei die Steuereinheit zum Verstellen einer Ausrichtung der Injektionsleitung ausgestaltet ist.

8. Fahrzeug nach einem der Ansprüche 1 bis 7, wobei jedes Unkrautmesser eine Klinge (121) umfasst.

9. Fahrzeug nach einem der Ansprüche 1 bis 8, wobei das Fahrzeug ein autonomes Fahrzeug ist.

10. Fahrzeug nach einem der Ansprüche 1 bis 9, wobei die Injektionsleitung eine Düse (123) umfasst.

11. Verfahren zum Behandeln eines landwirtschaftlich genutzten Felds mit dem Fahrzeug nach einem der Ansprüche 1 bis 10, das das landwirtschaftlich genutzte Feld durchquert, wobei das Verfahren Folgendes umfasst:
Detektieren einer Pflanze in einer Nutzpflanzenreihe (144),
Bestimmen, ob die Pflanze eine Nutzpflanze (129) oder ein Unkraut (130) ist,
falls die Pflanze eine Nutzpflanze ist, Bewegen des mindestens einen Unkrautmessers (110, 122), um zu verhindern, dass das mindestens eine Unkrautmesser die Pflanze berührt, wenn das Fahrzeug das landwirtschaftlich genutzte Feld durchquert, und Injizieren einer Substanz (128) in den Boden durch die von dem mindestens einen Unkrautmesser getragene Injektionsleitung (111), und,
wenn die Pflanze ein Unkraut ist, Bewegen des mindestens einen Unkrautmessers, um zu veranlassen, dass das mindestens eine Unkrautmesser die Pflanze stört, wenn das Fahrzeug das landwirtschaftlich genutzte Feld durchquert.

12. Verfahren nach Anspruch 11, ferner umfassend Analysieren eines Wachstumsstadiums der Pflanze.

13. Verfahren nach Anspruch 12, ferner umfassend das Bestimmen einer Menge der zu injizierenden Substanz oder eines Injektionsmusters der Substanz zumindest teilweise basierend auf dem Wachstumsstadium der Pflanze.

14. Verfahren nach einem der Ansprüche 11 bis 13, ferner umfassend Injizieren einer zweiten Substanz (145) durch die von dem Unkrautmesser getragene Injektionsleitung, wenn die Pflanze ein Unkraut ist.

15. Verfahren nach einem der Ansprüche 11 bis 14, wobei das Bestimmen, ob die Pflanze eine Nutzpflanze oder ein Unkraut ist, das Analysieren gespeicherter Kartendaten umfasst.

## Revendications

1. Véhicule (101) de traitement d'un champ agricole, comprenant :
une unité d'injection de désherbage (146) comprenant :
une vanne (108) ;
au moins un couteau de désherbage (110, 122) ;
au moins un actionneur (133, 134) configuré pour déplacer l'au moins un couteau de désherbage ;
une conduite d'injection (111) ; et
la vanne étant configurée pour réguler le débit d'une substance (128) à travers la conduite d'injection ; et
une unité de commande (124) configurée pour identifier une plante (129, 130) et commander l'au moins un actionneur (133, 134) et la vanne pour traiter la plante identifiée ;
**caractérisé en ce que** la conduite d'injection (111) est supportée sur l'au moins un couteau de désherbage.

2. Véhicule selon la revendication 1, comprenant en outre une caméra (109) configurée pour détecter la plante.

3. Véhicule selon la revendication 1 ou 2, dans lequel l'unité de commande (124) est configurée pour distinguer une plante constituant un produit de culture (129) d'une plante constituant une mauvaise herbe (130).

4. Véhicule selon l'une quelconque des revendications 1 à 3, comprenant en outre :
un réservoir d'emmagasinage (102) configuré pour contenir la substance ; et
une pompe (103) configurée pour distribuer la substance à la conduite d'injection par le biais d'au moins une conduite de distribution (105).

5. Véhicule selon la revendication 4, comprenant en outre :
un second réservoir d'emmagasinage (135) configuré pour contenir une seconde substance ; et
une seconde pompe (136) configurée pour distribuer la seconde substance à la conduite d'injection par le biais d'au moins une seconde conduite de distribution (138) ;
dans lequel la vanne (142) est configurée pour réguler alternativement le débit de la première substance ou de la seconde substance dans la conduite d'injection.

6. Véhicule selon l'une quelconque des revendications 1 à 5, dans lequel l'au moins un couteau de désherbage comprend un couteau de désherbage gauche et un couteau de désherbage droit (122).

7. Véhicule selon l'une quelconque des revendications 1 à 6, dans lequel l'unité de commande est configurée pour ajuster une orientation de la conduite d'injection.

8. Véhicule selon l'une quelconque des revendications 1 à 7, dans lequel chaque couteau de désherbage comprend une lame (121).

9. Véhicule selon l'une quelconque des revendications 1 à 8, le véhicule étant un véhicule autonome.

10. Véhicule selon l'une quelconque des revendications 1 à 9, dans lequel la conduite d'injection comprend une buse (123).

11. Procédé de traitement d'un champ agricole avec le véhicule selon l'une quelconque des revendications 1 à 10 parcourant le champ agricole, le procédé comprenant :
détecter une plante dans une rangée de culture (144) ;
déterminer si la plante est un produit de culture (129) ou une mauvaise herbe (130) ;
si la plante est un produit de culture, déplacer l'au moins un couteau de désherbage (110, 122) pour empêcher l'au moins un couteau de désherbage d'entrer en contact avec la plante tandis que le véhicule parcourt le champ agricole, et injecter une substance (128) dans le sol par le biais de la conduite d'injection (111) supportée sur l'au moins un couteau de désherbage ; et
si la plante est une mauvaise herbe, déplacer l'au moins un couteau de désherbage de façon à ce que l'au moins un couteau de désherbage agisse sur la plante tandis que le véhicule parcourt le champ agricole.

12. Procédé selon la revendication 11, comprenant en outre l'analyse d'un stade de croissance de la plante.

13. Procédé selon la revendication 12, comprenant en outre la détermination d'une quantité de la substance à injecter ou d'un modèle d'injection de la substance sur la base au moins en partie du stade de croissance de la plante.

14. Procédé selon l'une quelconque des revendications 11 à 13, comprenant en outre, si la plante est une mauvaise herbe, l'injection d'une seconde substance (145) par le biais de la conduite d'injection supportée sur le couteau de désherbage.

15. Procédé selon l'une quelconque des revendications 11 à 14, dans lequel l'opération consistant à déterminer si la plante est un produit de culture ou une mauvaise herbe comprend l'analyse de données cartographiques enregistrées.
